Europäisches Patentamt

European Patent Office

Office européen des brevets

(19)

(11) Veröffentlichungsnummer: **0 197 417**
**B1**

(12) **EUROPÄISCHE PATENTSCHRIFT**

(45) Veröffentlichungstag der Patentschrift:
**14.09.88**

(51) Int. Cl.⁴: **C 09 K 5/00**

(21) Anmeldenummer: **86104038.4**

(22) Anmeldetag: **24.03.86**

(54) **Wärmeübertragungsflüssigkeiten.**

(30) Priorität: **06.04.85 DE 3512626**

(43) Veröffentlichungstag der Anmeldung:
**15.10.86 Patentblatt 86/42**

(45) Bekanntmachung des Hinweises auf die Patenterteilung:
**14.09.88 Patentblatt 88/37**

(84) Benannte Vertragsstaaten:
**BE CH DE FR GB IT LI**

(56) Entgegenhaltungen:
**US - A - 2 095 619**
**US - A - 3 429 816**
**US - A - 3 575 863**

(73) Patentinhaber: **BAYER AG, Konzernverwaltung RP Patentabteilung, D-5090 Leverkusen 1 Bayerwerk (DE)**

(72) Erfinder: **Klein, Alfons, Virchowstrasse 9, D-4000 Düsseldorf 1 (DE)**
Erfinder: **Wedemeyer, Karlfried, Dr., Bilharzstrasse 7, D-5000 Koeln 80 (DE)**
Erfinder: **Rüter, Paul, Sonderburgerstrasse 1a, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft neue Wärmeübertragungsflüssigkeiten.

Aus der DE-OS 1 594 487 ist die Verwendung von Gemischen aus Diphenoxybiphenylverbindungen und unsubstituierten Polyarylethern, wie Di-(phenoxyphenoxy)-biphenylen und der US-PS 3 429 816 die Verwendung von Gemischen aus Monophenoxybiphenylen, Diphenoxybiphenylen, Diphenoxybenzolen und gegebenenfalls Terphenyl als Wärmeübertragungsflüssigkeit bekannt.

Aus der DE-OS 2 215 433 und der DE-OS 2 227 518 sind Wärmeübertragungszusammensetzungen bekannt, die Biphenyl, Diphenyloxid und Polyphenylether bzw. Diphenyloxid und Phenoxybiphenyle enthalten.

Es wurde nun gefunden, dass Gemische aus 60 bis 95 Gew.-% Monophenoxybiphenylen und 5 bis 40 Gew.-% Diphenoxybiphenylen wesentlich günstigere Eigenschaften als Wärmeübertragungsflüssigkeiten aufweisen, nämlich eine wirksamere Wärmeübertragung und eine höhere Thermostabilität als die in den vorstehend genannten Druckschriften beschriebenen Wärmeübertragungsflüssigkeiten.

Die Erfindung betrifft daher eine Wärmeübertragungsflüssigkeit bestehend aus einem Gemisch aus 60 bis 95 Gew.-% Monophenoxybiphenylen und 5 bis 40 Gew.-% Diphenoxybiphenylen.

Die in der erfindungsgemässen Wärmeübertragungsflüssigkeit enthaltenen Monophenoxybiphenyle und Diphenoxybiphenyle liegen üblicherweise als Isomerengemische vor. Die relative Anordnung der Phenoxygruppen ist dabei nicht kritisch, d.h., dass die Phenoxygruppen in jeder Position des Biphenyls stehen können. Bevorzugt sind jedoch solche Isomerengemische, in denen der Anteil an Monophenoxybiphenylen überwiegend das entsprechende meta-Isomere (mindestens 50 Gew.-%, besonders bevorzugt 50 bis 70 Gew.-%, bezogen auf die Summe aller isomeren Monophenoxybiphenyle) enthält. Eine solche Wärmeübertragungsflüssigkeit zeigt einen besonders niedrigen Gefrierpunkt und damit einen ungewöhnlich breiten Liquiditätsbereich.

Der Gehalt an Monophenoxybiphenylen und Diphenoxybiphenylen der erfindungsgemässen Wärmeübertragungsflüssigkeiten beträgt vorzugsweise 75 bis 85 Gew.-% Monophenoxybiphenyle und 15 bis 25 Gew.-% Diphenoxybiphenyle.

Die der erfindungsgemässen Wärmeübertragungsflüssigkeit zugrundeliegenden Monophenoxybiphenyle sind bekannt und können nach bekannten Verfahren hergestellt werden. So ist es beispielsweise möglich, die erfindungsgemässen Monophenoxybiphenyle durch Umsetzung von Natriumphenolat mit Monochlorbiphenylen herzustellen (US 3 095 619). Weiterhin lassen sich die erfindungsgemässen Monophenoxybiphenyle durch Umsetzung von Hydroxybiphenylen mit Halogenbenzol darstellen (US 22 095 619).

Die der erfindungsgemässen Wärmeübertragungsflüssigkeit zugrundeliegenden Diphenoxybiphenyle sind ebenfalls bekannt und können nach bekannten Verfahren hergestellt werden. So ist es beispielsweise möglich, die erfindungsgemässen Diphenoxybiphenyle durch Umsetzung von Dichlorbiphenylen mit Natriumphenolat herzustellen (DE-OS 1 594 487).

Besonders bevorzugt sind erfindungsgemässe Wärmeübertragungsflüssigkeiten, deren Herstellung von entsprechenden Gemischen aus isomeren Mono- und Dichlorbiphenylen, wie man sie durch Chlorierung von Biphenyl erhält, ausgeht. Zweckmässigerweise werden solche Gemische isomerer Mono- und Dichlorbiphenyle vor der Umsetzung mit Natriumphenolat isomerisiert, um das meta-Isomere des Monochlorbiphenyls anzureichern. Eine solche Isomerisierung auf der Stufe der Chlorbiphenyle wird im allgemeinen mit Hilfe von Friedel-Crafts-Katalysatoren, wie AlCl$_3$, durchgeführt. Die Reaktion eines solchen isomerisierten Gemisches aus Mono- und Dichlorbiphenylen mit einem überwiegenden Gehalt (ca. 50 bis 70 Gew.-%, bezogen auf die Summe aller isomeren Monochlorbiphenyle) an meta-Isomeren des Monochlorbiphenyls mit Natriumphenolat liefert unmittelbar die erfindungsgemäss als Wärmeübertragungsflüssigkeiten zu verwendenden Gemische aus 60 bis 95 Gew.-% (Verhältnis von o-:m-:p-Monophenoxybiphenyl etwa 5:65:30) Monophenoxybiphenylen und 5 bis 40 Gew.-% Diphenoxybiphenylen.

Eine besonders vorteilhafte Eigenschaft der erfindungsgemässen Wärmeübertragungsflüssigkeit ist der breite Liquiditätsbereich, dessen untere Grenze bei −17°C liegt. Dadurch wird z.B. auch im Winterbetrieb ein problemloses Anfahren eines Heizungssystems gewährleistet.

Gegenüber den aus der DE-OS 1 594 487 bekannten Flüssigkeiten besitzt die erfindungsgemässe Wärmeübertragungsflüssigkeit deutliche Vorteile. Infolge der niedrigen Viskosität zeigt die erfindungsgemässe Wärmeübertragungsflüssigkeit ein bedeutend günstigeres Kaltstartverhalten im Heizungssystem. Bei Flüssigkeiten mit hoher Viskosität ist der Wärmeübergang vor allem während der Anfahrphase — aber auch zur Zeit des vollen Betriebs — merklich schlechter.

Gegenüber den in der US-PS 3 429 816 als Wärmeübertragungsflüssigkeiten beschriebenen, aus Mono- und Diphenoxybiphenylen, Diphenoxybenzolen und gegebenenfalls Terphenylen bestehenden Gemischen zeichnen sich die erfindungsgemäss als Wärmeübertragungsflüssigkeiten zu verwendenden Gemische aus Mono- und Diphenoxybiphenylen durch eine wesentlich verbesserte thermische Stabilität aus. Wie aus dem im Beispiel beschriebenen Thermostabilitätstest hervorgeht, spalten die erfindungsgemäss zu verwendenden Gemische auch bei 1000stündigem Erhitzen auf 380°C noch kein Kondensat ab, während bei gleicher thermischer Belastung der in der US-A-3 429 816 beschriebenen Wärmeübertragungsflüssigkeiten 20 ml Kondensat gebildet werden.

Auch gegenüber den bekannten Wärmeübertragungsflüssigkeiten aus der DE-OS 2 215 433 und der DE-OS 2 227 518 besitzt die erfindungsgemässe Wärmeübertragungsflüssigkeit deutliche Vorteile. Bedingt durch den relativ niedrigen Siedepunkt des Biphenyls bzw. Diphenyloxids sind dem Einsatz der aus dem obengenannten Stand der Technik bekannten Wärmeträger Grenzen gesetzt. Diese lassen sich für den Wärmetransport über 270°C nicht drucklos einsetzen. Der Einsatz über 270°C erfordert eine konstruktiv aufwendige Druckheizanlage. Beim Auftreten von Undichtigkeiten innerhalb einer solchen Anlage während des Betriebs über 270°C kommt es zum schnellen Austritt überhitzter Dämpfe, wodurch die Gefahr einer Raumexplosion besteht. Demgegenüber erlaubt die erfindungsgemässe funktionelle Flüssigkeit einen drucklosen Einsatz bis 380°C.

*Beispiel*

In 618 g Biphenyl und 0,5 ml SbCl$_5$ wurden bei 100°C 325 g Chlor (80 g/h) eingeleitet. Durch dieses Chlorierungsprodukt leitete man bei 20°C 5 Minuten lang trockenes HCl-Gas und gab anschliessend 12 g AlCl$_3$ hinzu. Man leitete nochmals, ebenfalls bei 20°C, 15 Minuten HCl-Gas durch das Gemisch, erhitzte innerhalb einer halben Stunde auf 120°C und rührte bei dieser Temperatur eine Stunde.

Zusammensetzung (GC):

|  | Chlorierung | Isomerisierung |
|---|---|---|
| Biphenyl | 7,0% | 7,0% |
| o-Chlorbiphenyl | 46,6% | 2,1% |
| m-Chlorbiphenyl | 1,9% | 46,2% |
| p-Chlorbiphenyl | 22,4% | 23,1% |
| Dichlorbiphenyle | 22,1% | 21,6% |

Das Isomerisierungsprodukt wurde mit 1000 g Phenol und 140 g Toluol versetzt. Unter Rühren und gleichzeitiger aceotroper Destillation über einen Wasserabscheider tropfte man innerhalb einer Stunde 775 g 50%ige KOH ein und entwässerte weitere vier Stunden. Danach wurde das Toluol bis zu einer Sumpftemperatur von 190°C abdestilliert, und nach dem Abkühlen auf 120°C wurden 5 g CuO zugesetzt. Man liess 10 Stunden bei 190°C rühren, kühlte ab auf etwa 90°C und liess nach Zugabe von 1,4 l Wasser soviel konzentriertes HCl zutropfen, dass ein pH-Wert von 1,0 erreicht wurde. Man kochte $^1/_2$ Stunde am Rückfluss und trennte die untere wässrige Schicht ab. Die organische Phase wurde über einen 10 cm Aufsatz destilliert. Im Wasserstrahlvakuum erhielt man bis 100°C 530 g Phenol zurück. Danach wurde mit Pumpenvakuum nach Zugabe von 6 g 45%iger NaOH weiter destilliert:

Fraktion 1) Kp$_{0,8}$: bis 145°C 70 g
Fraktion 2) Kp$_{0,8}$: 145-230°C 840 g

Fraktion 1) bestand im wesentlichen aus Biphenyl; Fraktion 2), die funktionelle Flüssigkeit, war von hellgelber Farbe und wie folgt zusammengesetzt:

| o-Phenoxybiphenyl | 3,5% | Zusammenset- |
|---|---|---|
| m-Phenoxybiphenyl | 50,8% | zung der funktio- |
| p-Phenoxybiphenyl | 26,3% | nellen Flüssigkeit |
| Diphenoxybiphenyle | 19,4% | |

Die obige erfindungsgemässe funktionelle Flüssigkeit zeigte folgende Stoffdaten:

TABELLE 1

| Temperatur °C | Dichte Kp/m$^3$ | Spez. Wärme KJ/Kg·K | Wärmeleitfähigkeit W/m·K | Kin. Viskosität mm$^2$/sec (cSt) |
|---|---|---|---|---|
| 0 | 1146 | 1,425 | $1,645 \cdot 10^{-1}$ | 4270 |
| 10 | 1139 | 1,455 | $1,640 \cdot 10^{-1}$ | 638 |
| 20 | 1131 | 1,480 | $1,635 \cdot 10^{-1}$ | 154 |
| 30 | 1124 | 1,524 | $1,625 \cdot 10^{-1}$ | 60 |
| 40 | 1117 | 1,550 | $1,615 \cdot 10^{-1}$ | 31,9 |
| 50 | 1110 | 1,575 | $1,610 \cdot 10^{-1}$ | 18,2 |
| 60 | 1102 | 1,600 | $1,605 \cdot 10^{-1}$ | 10,2 |
| 70 | 1095 | 1,625 | $1,600 \cdot 10^{-1}$ | 8,0 |
| 80 | 1089 | 1,652 | $1,590 \cdot 10^{-1}$ | 6,0 |
| 90 | 1081 | 1,675 | $1,585 \cdot 10^{-1}$ | 4,6 |
| 100 | 1074 | 1,701 | $1,575 \cdot 10^{-1}$ | 3,84 |
| 120 | 1067 | 1,735 | $1,565 \cdot 10^{-1}$ | 2,58 |

| Siedepunkt bei 1 bar | >380°C |
|---|---|
| Pourpoint | -17°C |
| Flammpunkt (DIN 51 758) | 97°C |
| Zündtemperatur | 595°C |

Die thermische Stabilität der erfindungsgemässen Flüssigkeit wurde mit der der aus US 3 429 816 bekannten Diphenoxybenzole verglichen.

*Thermostabilitätstest*

In ein eisernes Druckgefäss füllte man 2000 ml Wärmeträger und heizte auf 380°C. Sobald diese Temperatur erreicht war, wurde der gebildete Ausdehnungsdruck abgelassen. Über 1000 Stunden bei 380°C wurde der Druckanstieg kontrolliert. Nach Beendigung der Heizperiode kühlte man auf 360°C ab und entspannte durch einen Kühler. Das aufgefangene Kondensat wurde gemessen. Die im Druckgefäss verbleibende Flüssigkeit wurde auf nicht mehr destillierbaren, harzigen Anteil untersucht. Die Höhe des Druckanstiegs sowie die gebildete Menge Kondensat und Harz sind ein Mass für die thermische Zersetzung des gerpüften Wärmeträgers.

### TABELLE 2

|   | Einsatz-menge ml | Druck nach 1000 Std. bar | Kondensat ml | Harz-anteil % |
|---|---|---|---|---|
| A | 2000 | 8,6 | 320 | 40,2 |
| B | 2000 | 1,3 | 0 | 3,2 |
| C | 2000 | 1,4 | 20 | 6,8 |

A = bekannte Diphenoxybenzole aus US
    3 429 816

B = erfindungsgemässe Flüssigkeit

C = bekannte Flüssigkeit aus US 3 429 816,
    Beispiel 4

Die Viskositäten der erfindungsgemässen funktionellen Flüssigkeit und die der aus DE-OS 1 594 487 bekannten Flüssigkeiten wurden miteinander verglichen:

### TABELLE 3

Kinetische Viskosität mm$^2$/sec (cSt) bei
Temperaturen in °C

|   | 25°C | 38°C | 99°C |
|---|---|---|---|
| D | 859,1 | 196,7 | 7,532 |
| B | 80,1 | 32,3 | 3,82 |

B = erfindungsgemässe Flüssigkeit

D = bekannte Flüssigkeit aus DE-OS 1 594 487
    (Beispiel 1)

## Patentansprüche

1. Wärmeübertragungsflüssigkeit bestehend aus einem Gemisch aus 60 bis 95 Gew.-% Monophenoxybiphenylen und 5 bis 40 Gew.-% Diphenoxybiphenylen.

2. Wärmeübertragungsflüssigkeit nach Anspruch 1, dadurch gekennzeichnet, dass die im Gemisch enthaltenen Monophenoxybiphenyle überwiegend m-Phenoxybiphenyl enthalten.

3. Wärmeübertragungsflüssigkeit nach Anspruch 2, dadurch gekennzeichnet, dass der Anteil an m-Phenoxybiphenyl mindestens 50 Gew.-%, bezogen auf die Summe aller isomeren Monophenoxybiphenyle, beträgt.

4. Verwendung von Gemischen aus 60 bis 95 Gew.-% Monophenoxybiphenylen und 5 bis 40 Gew.-% Diphenoxybiphenylen als Wärmeübertragungsflüssigkeiten.

## Claims

1. Heat transfer fluid consisting of a mixture of 60 to 95% by weight of monophenoxybiphenyls and 5 to 40% by weight of diphenoxybiphenyls.

2. Heat transfer fluid according to Claim 1, characterized in that the monophenoxybiphenyls contained in the mixture contain mainly m-phenoxybiphenyl.

3. Heat transfer fluid according to Claim 2, characterized in that the content of m-phenoxybiphenyl is at least 50% by weight, relative to the sum of all the isomeric monophenoxybiphenyls.

4. Use of mixtures of 60 to 95% by weight of monophenoxybiphenyls and 5 to 40% by weight of diphenoxybiphenyls as heat transfer fluids.

## Revendications

1. Liquide de transmission de chaleur consistant en un mélange à 60-95% en poids de monophénoxybiphényles et à 50-40% en poids de diphénoxybiphényles.

2. Liquide de transmission de chaleur selon la revendication 1, caractérisé en ce que les monophénoxyphényles contenus dans le mélange contiennent en prépondérance du m-phénoxybiphényle.

3. Liquide de transmission de chaleur selon la revendication 2, caractérisé en ce que la proportion de m-phénoxybiphényle est au moins de 50% en poids par rapport à la somme de tous les monophénoxybiphényles isomères.

4. Utilisation de mélanges à 60-95% en poids de monophénoxybiphényles et à 5-40% en poids de diphénoxybiphényles comme liquides de transmission de chaleur.